# EUROPEAN PATENT APPLICATION

(11) **EP 0 638 414 A2**
(43) Date of publication of application: **15.02.1995**
(21) Application number: 94305444.5
(22) Date of filing: 22.07.1994
(51) Int. Cl.: B32B 27/12, E04B 7/00

(54) **Non-woven material used as substrates in thermoplastic composite roof panels**

(30) Priority: 11.08.1993 US 106091
(71) Applicant: GENERAL ELECTRIC COMPANY, Schenectady, NY 12345 (US)
(72) Inventor: Hall, Walter Lawrence, Mount Vernon, Indiana 47620 (US); Teutsch, Erich Otto, Richmond, Massachusetts 01254 (US)
(74) Representative: Pratt, Richard Wilson

(57) **Abstract**

Roofing panels are provided having a thermoplastic composite substrate and a weather-resistant outer film layer. The substrates have reinforcing fibers and a thermoplastic matrix material. The weather-resistant thermoplastic film layer is made from either an inherently weather-resistant thermoplastic material or from a thermoplastic material containing an effective amount of stabilizer compounds. The panels are relatively light weight and exhibit desired levels of resistance to weathering.

## Description

### BACKGROUND OF THE INVENTION

### Field of the Invention

The present invention relates to roofing panels, and more particularly relates to roofing panels shaped from composite sheets comprising a fiber reinforced thermoplastic composite substrate and a protective weather-resistant outer film layer.

### Description of the Related Art

Aqueous methods of making fiber reinforced composite materials from an aqueous slurry of, solid polymer and reinforcing material are known. See Published European Patent Applications 0,148,760 and 1,148,761, Wessling et al., U.S. Patent No. 4,426,470 issued January 17, 1984 and Gatward et al., U.S. Patent No. 3,716,449 issued February 13, 1973, all of which are incorporated herein by reference. In general these reinforced polymer composites have a uniform mixture of fiber, polymer and optionally binder and are prepared by forming dilute aqueous slurries of a solid heat-fusible organic polymer, a reinforcing material and optionally a latex binder.

Roofing panels have been made and used from such composites. Such panels have the advantage of being light weight, large, easy to install, and can be shaped by a number of suitable shaping processes including matched molding and pressure forming. Such composites, however, can exhibit undesired degradation due to exposure to weathering elements such as heat, moisture and/or ultraviolet light.

Accordingly, there is a need for roofing panels from thermoplastic composites which exhibit resistance to weathering.

### Summary of the Invention

This invention provides roofing panels shaped from composite sheets comprising (a) a thermoplastic composite substrate comprising (i) reinforcing fibers, preferably reinforcing inorganic fibers, and (ii) a thermoplastic matrix material; and (b) a weather-resistant thermoplastic outer cap film layer. The film layer is sufficiently thin to permit shaping of the sheet into the desired panel by forming processes, but has sufficient resistance to weathering to protect the composite from extended exposure to heat, moisture and ultraviolet light. The sheets can be shaped into a number of desired panel shapes including that of cedar shingles and ceramic tiles, are light weight, and may be of sufficient size to reduce installation costs.

### Detailed Description of the Invention

The roofing panel is shaped from a composite sheet having (a) a thermoplastic substrate comprising (i) reinforcing fibers, preferably reinforcing inorganic fibers, preferably having lengths of from 0.1 to 2.0 inches, wherein the fibers are preferably present in the substrate at a level of from 30% to 70% by weight based on the total weight of the substrate, and (ii) a thermoplastic matrix material preferably present at a level of from 30% to 70% by weight based on the total weight of the substrate; and (b) a weather-resistant thermoplastic film layer overlying the substrate and attached thereto.

The substrate is obtained by a process which involves (1) an aqueous medium, preferably (2) a binder, usually at least partially in the form of a latex which contains either anionic or cationic bound charges, (3) a heat-fusible organic polymer which is in particulate form, (4) reinforcing fibers, and (5) optionally a flocculent.

In one process, a dilute aqueous slurry is prepared containing the aqueous medium, the heat fusible organic polymer particulates and the reinforcing fibers. The slurry is agitated and then uniformly distributed onto a porous support and is allowed to drain to form a wet mat, the wet mat is optionally passed through press rolls and then dried, such as passing the wet mat througn a series of heated dryer rolls to obtain a dried mat which optionally is rolled onto a cylinder or collected as a flat sheet stock. The dried mat may then be subjected to various kinds of treatment for the intended use such as compression molding the dried mat to fuse the organic polymer particulates and thereby form the composite substrate. Optionally, a binder material is employed in the dilute aqueous slurry and the solids are flocculated during agitation with a polymeric flocculent having an opposite charge to that of the latex binder. Suitable binders and flocculents are set forth in Wessling et al., U.S. Patent No. 4,426,470 issued January 17, 1984 which is incorporated herein by reference. Suitable latexes which can be used in the present invention include those described in U.S. Pat. No. 4,056,501, issued November 1, 1977, to Gibbs et al., incorporated herein by reference.

The invention requires a normally solid, heat fusible organic polymer which will form the thermoplastic matrix material. By "heat fusible" is meant that the polymer particles are capable of deformation under heat to join into a unitary structure and preferably exhibit good adhesion to the reinforcing fiber. The heat fusible polymers are preferably thermoplastic resins. The heat fusible organic polymer component of the present invention is desirably a hydrophobic, water-insoluble addition polymer. These polymers are in particulate form and may be in the form of a powder or a dispersion. Suitable heat fusible organic polymers include addition and condensation polymers such as, for example, polyethylene; ultra high molecular weight polyethylene; chlorinated polyethylene; bipolymers of ethylene and acrylic acid; polypropylene; polyamides, polycarbonates; phenylene oxide resins; phenylene sulfide resins; Polyoxymethylenes; polyesters; terpolymers of acrylonitrile, butadiene and styrene; polyvinylchloride; bipolymers of a major proportion of vinylidene chloride and a minor proportion of at least one other alpha,beta-ethylenically unsaturated monomer copolymerizable therewith; and styrene homopolymers or copolymers. The polymer particulates generally and advantageously have a particle size in the range of 1 to 800 microns. The polymers are generally employed in the composite substrate an amount of from 20% to 90% by weight based on the total weight of the composite substrate and more preferably at a level of from 30% to 70% by weight thereof.

The reinforcement fibers include inorganic materials such as graphite, metal fibers, aromatic polyamides, cellulose and polyolefin fibers, but preferably and advantageously comprises glass fibers such as chopped glass strands having a length of 1/8 to 1 inch (about 3.2 to 25.4 mm), milled glass fibers which generally have a length of about 1/32 to 1/8 inch (about 0.79 to 3.2 mm) and mixtures thereof. The glass fibers are advantageously heat cleaned and, to improve impact properties, such fibers may be compatibilized by having a thin coating of, for example a polyolefin resin or starch thereon. The fibers are preferably surface treated with chemical sizing or coupling agents which are well known in the art. The reinforcing material generally comprises from 10 to 80 weight percent based on the total weight of the substrate, and more preferably 30 to 70 percent by weight thereof.

The reinforcing fiber used in the composites of the present invention preferably have at least 95% by weight of said fibers having lengths of less than 2 inches, more preferably less than 1.5 inches, and even more preferably less than 1.1 inch.

The process for making the composite sheet which can be formed into a roofing panel involves first forming a mat as defined above overlaying a weather-resistant film layer over the mat to prepare the composite sheet, followed by heating the sheet to a temperature sufficient to melt the thermoplastic particulate material and stamping the consolidated sheet into a final panel article.

The composite sheets of the invention may also, optionally, contain a variety of other ingredients. Minor amounts, for example, 1-33% by weight, of fillers such as silicon dioxide (Novacite), CaCO₃, MgO, CaSiO₃ (wollastonite) and mica may be incorporated in the mat of the composite sheets of this invention it desired. Pigments or dyes may be added to impart opacity and/or color.

The thermoplastic substrates may be formed by blending the heat-fusible polymer particulates, the reinforcing fibers, and the water, agitating to form a slurry, dewatering to form a continuous mat, drying, and applying heat and pressure to the mat to melt the thermoplastic resin. After the weather-resistant film layer is overlaid onto the substrate, the film and substrate form a composite sheet which is useful as a preform for roofing panels and which can then be stamped to form the final roofing panel.

This method for making the substrate is conveniently carried out by first stirring the reinforcing material in water until it is uniformly dispersed, then slowly adding the heat-fusible polymer, and stirring the materials throughout this portion of the process. This slurry of water, heat-fusible polymer, reinforcing material and optionally latex binder and flocculent preferably has a total solids content of 0.01 to 5% solids by weight, and more preferably 0.02 to 0.5% solids by weight based on the total weight of the slurry.

The composite substrate making process may be accomplished by any conventional paper making apparatus such as a sheet mold or a Fourdrinier or cylinder machines.

After the mat is formed into a dewatered mat, it may be desirable to densify the mat by pressing it with a flat press or by sending it through calendaring rolls. Densification after drying of the mat is particularly useful for increasing the tensile and tear strength of the mat. Drying of the mat may be either air drying at ambient temperatures or oven drying.

The weather-resistant thermoplastic film layer which is employed for the outer surface of the roofing panel, and which is overlaid and attached to the substrate by any suitable means including thermoplastic adhesion during the stamping process, chemical adhesives, or mechanical attaching means to make the composite sheet. The weather-resistant thermoplastic film layer is preferably made from a thermoplastic material which inherently exhibits high resistance to weathering, that is resistance to heat, moisture and ultraviolet light. Alternatively, the weather-resistant thermoplastic film layer may be made from thermoplastic compositions which contain an effective amount of stabilizer additives to effectively provide the outer film layer with the desired level of resistance to weathering. Suitable materials for the film layer include polyflouroolefins (such as polytetrafluoroethylene), polyacrylics, and polyorganosiloxanes. If sufficiently high levels of stabilizers are employed, the outer thermoplastic film layer may be any suitable organic polymer including for example those listed above for the thermoplastic matrix material. Suitable stabilizers include primary antioxidants, secondary antioxidants, and ultraviolet light stabilizers including those used in the common sense of the term ultraviolet light stabilizers, as well as ultraviolet light absorbers. Suitable stabilizers include those in the class of hindered amines, organphosphorous compounds and phenolics. More specifically, suitable stabilizers include benzophenones, benzotriazoles, piperdyls, phosphites, phosphinites, and hinders phenols.

Suitable stabilizer components include hindered amines, hindered phenolics and organic phosphorous compounds, and are set out in Moore, Jr. U.S. Pat. No. 4,888,369 which is incorporated herein by reference. A hindered phenolic component selected from the group consisting of 1,3,5-tris(3,5-di-t-butyl-4-hydroxy-benzyl)-s-triazine, tetrakis(methylene (3-3',5'-di-t-butyl-4'-hydroxyphenyl)propionate) methane, 1,3,5-tris-(4-t-butyl-3-hydroxy-2,6-dimethylbenzyl)-1,3,5-triazine-2,4,6(IH, 3H, 5H)trione, and 3,5-di-t-butyl-4-hydroxycinnamic acid triester with 1,3,5-tris-(2-hydroxethyl)-s-double bond-triazine-2,4,6(1 H, 3H, 5H)trione. Suitable phosphorus containing compounds include those selected from the group consisting of tetrakis(2,4-di-t-butyl-phenyl)4,-4'-biphenylylene disphosphonite, tris(2,4-di-t-butylphenyl)-phosphite, trisnonylphenyl phosphite, bis(2,4-di-t-butylphenyl)pentaerythritol diphosphite, bis(distearyl)pentaerythritol diphosphite and bis(distearyl)pentaerythritol diphosphite with one percent (1%) triethanolamine. Suitable hindered amine components include benzotriazoles including 2-hydroxy phenyl benzotriazoles, benzophenones including 2-hydroxy benzophenones and hindered piperidinyl compounds, including 2,2,6,6-tetramethyl piperidyl compounds.

The 2-hydroxyphenylbenzotriazoles contemplated herein are those which conform to the structural formula 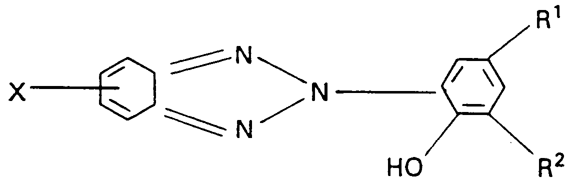
wherein R¹ is lower alkyl or halogen (preferably chlorine), R² is lower alkyl, halogen (preferably chlorine) or hydrogen, and X is chlorine or hydrogen.

Illustrative examples of such 2-hydroxyphenylbenzotriazoles include 2(2'-hydroxy-3'-5'-ditertiarybutylphenyl)5-chlorobenzotriazole (Tinuvin 327), 2-(2'-hydroxy-3',5'-dimethylphenyl)benzotriazole, 2-(2'-hydroxy-5'-tertiarybutylphenyl)benzotriazole, 2-(2'-hydroxy-5'-amlphenyl)5-chlorobenzotiazole, 2-(2'-hydroxy-3'-tertiarybutyl-5'-methylphenyl) benzotriazole (Tinuvin P), 2-(2'-hydroxy-3',5'-dimethylphenyl)5-chlorobenzotriazole, 2-(2'-hydroxy-3',5'-ditertiaryoctylphenyl)benzotriazole (Tinuvin 328), 2-(2'-hydroxy-3',5'-dichlorophenyl)benzotriazole, and 2-(2'-hydroxy-3'-methyl-5'-tertiaryoctylphenyl)benzotriazole. The term "lower alkyl" denotes an alkyl group having 1-10 carbon atoms.

Many of the benzotriazoles of this invention are available under the trademark designation Tinuvin 326, Tinuvin 327, Tinuvin 328, Tinuvin P, etc. They may be prepared by coupling an aromatic diazo compound with an aromatic amine, followed by oxidation of the coupled intermediate. An illustrative preparation is as follows: 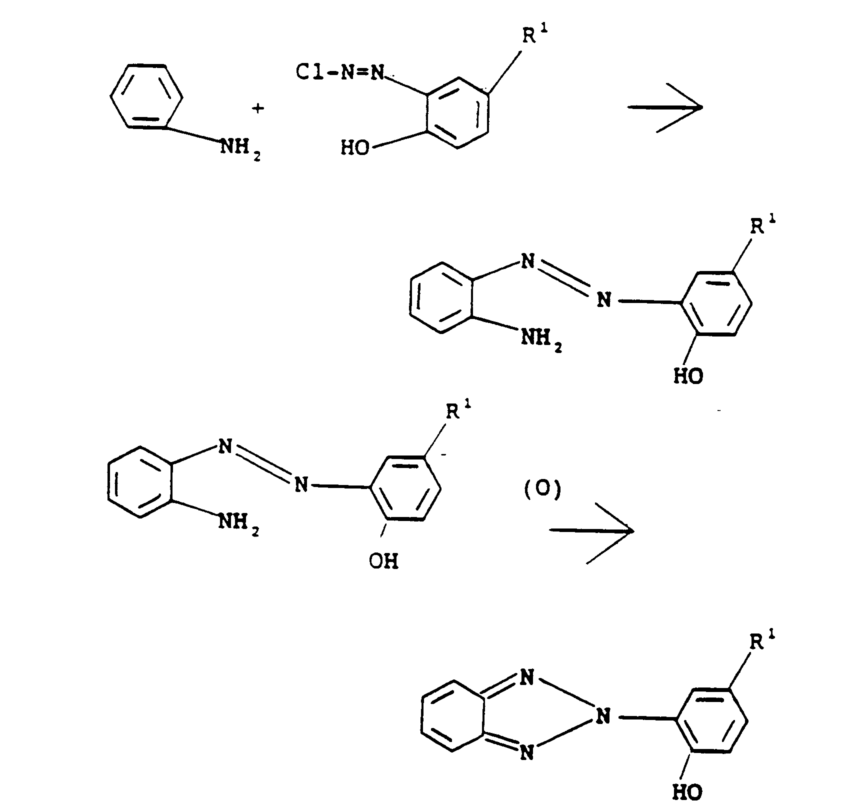
Other methods of preparation are set out in U. S. Pat. No. 3,004,896 (Heller et al.) and U.S. Pat. No. 3,189,615 (Heller et al.).

Representative benzophenones include 2-hydroxy-4-octyloxybenzophenone, 2-hydroxy-4-dodecyloxybenzophenone, 2-hydroxy-4-n-hexyloxybenzophenone, 2-hydroxy-4-methoxybenzophenone, 2,2'-dihydroxy-4,4'-dimethoxybenzophenone, 2,2'-dihydroxy-4-methoxybenzophenone, and the like; representative benzotriazoles include 2-(2'-hydroxy-5'-methyl-phenyl)benzotriazole, 2-(3'-tert.butyl-2'-hydroxy-5'-methylphenyl)-5-chlorobenzotriazole, 2-(3',5'-di-tert-.butyl-2'-hydroxyphenyl)-5-chlorobenzotriazole, 2-(2'-hydroxy-5'-tert.octylphenyl)benzotriazole, 2-3',5'-di-tert.amyl-2'-hydroxyphenyl)benzotriazole, and the like.

Suitable piperidinyl compounds include a piperidinyl compound having the formula 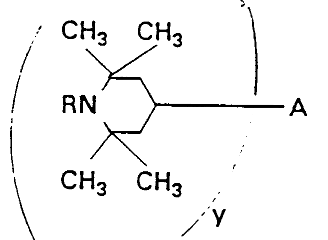
where R is alkyl of 1-4 carbon atoms or hydrogen, y is 1-4 and A is an organic radical for a phosphorus acid residue, and a pentaerythritol polyphosphite. The organic radical or phosphorous acid residue may be an ester, carbonate, ether, thiocarbonate, sulfinate, sulfonate, phosphite or phosphate radical, as shown more particularly in U.S. Pat. No. 3,640,928.

More narrowly, a piperidinyl compound havign the formula 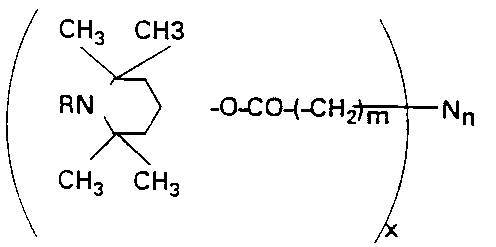
where R is alkyl and 1-4 carbon atoms or hydrogen, m is 1-4, x is 2-3 and n is 0 or 1, and a pentaerythritol polyphosphite.

It will be noted that the above piperidinyl compound may comprise three substituted piperidinyl groups bound to one another through a nitrogen atom, as well as one where two substituted piperidinyl groups are bound to one another through the residue of an aliphatic diacarboxylic acid. In the first instance, such a compound may be prepared by the reaction of a lower alkyl ester of a tricarboxylic acid having the formula

N((CH₂)ₘCOOH)₃

where m is 1-4, with 4-hydroxy-2,2,6,6-tetramethyl-piperidine.

In the other instance, the piperidinyl compound of the invention may be prepared by reaction of a di(lower)alkyl dicarboxylate with the 4-hydroxy-2,2,6,6-tetramethylpiperidine. Illustrative di-(lower)alkyl dicarboxylates include dimethyl and diethyl, glutarates, suberates, sebacates, adipates and pimelates.

The roofing panels preferably have a dimension of either 4 feet by 4 feet square or 4 feet by 8 feet rectangular shape. These large shapes increase the ease of installation of the panels. Optionally the roofing panels may have lengths ranging from 0.5 to 10 feet, and widths ranging from 0.5 to 10 feet.

## Claims

1. A composite sheet useful as a preform for roofing panels, said sheet comprising:
(a) a thermoplastic composite substrate comprising
(i) reinforcing fibers having lengths of from 0.1 to 2.0 inches, said fibers being present in said substrate at a level of from 10% to 80% by weight based on the total weight of the substrate, and
(ii) a thermoplastic matrix material present at a level of from 20% to 90% by weight based on the total weight of the substrate; and
(b) a weather-resistant thermoplastic film layer selected from the group consisting of polyfluorolefin films, polyacrylic films, polyvinylchloride, polyqrganic siloxane films, acrylonitrile-styrenebutylacrylate films and thermoplastic films comprising from 0.1% to 10% by weight of an ultraviolet light stabilizer.

2. The sheet of claim 1 wherein said substrate has a thickness of between 0.025 and 4.0 inches, said film layer has a thickness of between 0.005 inch and .25 inch.

3. The sheet of claim 2 wherein said film layer is a thermoplastic film comprising from 0.1% to 10% by weight of an ultraviolet light stabilizer based on the total weight of the film.

4. The sheet of claim 2 wherein said film layer comprises acrylonitrile-styrene-butylacrylate resin.

5. The sheet of claim 2 wherein said substrate is a lofted structure having an average density of between 0.1 and 0.4 g/cm³.

6. The sheet of claim 2 wherein said thermoplastic matrix material is a polyphenylene ether resin.

7. The sheet of claim 1 wherein said sheet consists essentially of said substrate and said film layer.

8. The sheet of claim 1 wherein said film layer comprises a polytetraflouroethylene film.

9. The sheet of claim 6 wherein said sheet consists essentially of said film layer and said substrate.

10. The sheet of claim 1 wherein said reinforcing fibers are inorganic reinforcing fibers.

11. A roofing panel shaped from the sheet of claim 1.

12. The sheet of claim 1 wherein said reinforcing fibers are glass reinforcing fibers.

13. A roofing panel shaped from the sheet of claim 9.
